# EUROPÄISCHE PATENTSCHRIFT

(11) **EP 3 101 493 B1**
(45) Veröffentlichungstag und Bekanntmachung des Hinweises auf die Patenterteilung: **20.03.2019**
(21) Anmeldenummer: 15170457.4
(22) Anmeldetag: 03.06.2015
(51) Int. Cl.: G05B 19/05, G06F 9/50, H04L 12/00

(54) **SYSTEM UND VERFAHREN ZUR STEUERUNG UND/ODER ANALYTIK EINES INDUSTRIELLEN PROZESSES**
SYSTEM AND METHOD FOR CONTROL AND/OR ANALYSIS OF AN INDUSTRIAL PROCESS
SYSTÈME ET PROCÉDÉ DE COMMANDE ET/OU D'ANALYSE D'UN PROCESSUS INDUSTRIEL

(43) Veröffentlichungstag der Anmeldung: 07.12.2016
(60) Teilanmeldung: 19000060.4
(73) Patentinhaber: Siemens Aktiengesellschaft, 80333 München (DE)
(72) Erfinder: Verma, Amit, 15732 Eichwalde (DE)

(56) Entgegenhaltungen:
- EP-A1- 2 605 096
- CN-A- 102 968 320
- JP-A- 2015 056 766

## Beschreibung

Die Erfindung betrifft ein System und ein Verfahren zur Steuerung und/oder Analytik eines industriellen Prozesses und damit ein System und ein Verfahren für eine vermischte Prozesssteuerung für einen industriellen Prozess.

Eine Vielzahl von Anlagen, die eine Prozesssteuerung vornehmen, erfüllt in der Regel einfache automatisierungs- und regelungstechnische Aufgaben. Diese Aufgaben werden in der Regel von Automatisierungseinheiten durchgeführt, die Vor-Ort und damit in der Nähe des zu automatisierenden Prozesses installiert sind. Oft bestehen solche Anlagen dann auch aus einer Vielzahl meist auch räumlich getrennter, kleinerer Automatisierungseinheiten, was dann zur Folge hat, dass auch die einzelnen Prozessaufgaben verteilt ablaufen. Solche kleineren Automatisierungseinheiten sind aufgrund ihrer eingeschränkten Rechenleistung eher nicht in der Lage komplexe Regelungsstrukturen oder Regelungs- und/oder Simulationsstrategien abzubilden, wie sie in Automatisierungsgeräten der höheren Klassen möglich sind. Solche komplexeren Regelungsstrategien, die eine erhebliche Rechenkapazität benötigen können, können beispielsweise sogenannte modellprädiktive Regelungen (Model Predictive Control, MPC) sein, wie sie bevorzugt in verfahrenstechnischen Prozessen eingesetzt werden. Häufig besteht auch der Wunsch komplexe Regelungen einzurichten, die auf umfangreichen historischen Daten aufbauen und diese beispielsweise in sog. Support Vector Machines (SVM) zu nutzen, um auf dieser Basis Optimierungen am Prozess vornehmen zu können. Deshalb werden solche rechenintensiven verfahrenstechnische Prozesse oder Datenanalysemodelle häufig im übergeordneten Steuerungs-, und Überwachungssystem der Anlage automatisiert.

Wir erleben aktuell einen Trend in Richtung zentraler Datenanalytik in externen Rechnereinheiten (sog. cloud based analytic). Aufgrund seiner umfangreichen Analytikmethoden und der meist selbstlernenden Techniken erlaubt die Cloud-basierte Analytik eine wesentliche Verbesserung der Prozesssteuerungen. Allerdings sind die Cloud-basierten Ansätze oft nicht echtzeitfähig, weil die Daten von Sensoren oder Aktoren des industriellen Prozesses von der Anlage in die externe Recheneinheit übertragen werden müssen, um sie dort zu analysieren. Danach ist das Analyseergebnis für weitere Aktionen zurück zu senden, um im in der Anlage prozesswirksam zu werden, was in Summe nicht akzeptable Zeitverluste bedeutet. Geschlossene Regelkreise sind - insbesondere dann, wenn wegen der Regelgeschwindigkeit verhältnismäßig schnelle Abtastraten notwendig werden - mit Cloud-basierten Methoden wegen der unsicheren zumindest aber wenig deterministischen Kommunikation problematisch. Die wesentlichen Quellen solche Zeitverluste liegen a) in der Datenakquisition, der -vorverarbeitung und -verdichtung, b) in der Übertragung von Daten in die Cloud und c) in der Analytik und Ergebnisberechnung selbst. Um das Problem der Latenzzeiten in Cloud basierten Systemen abzumildern, wird versucht die Datensammlung durch geeignete schnellere Hardware zu ermöglichen. Desweiteren wird vorgeschlagen die Daten einer Vorverarbeitung zu unterziehen, um dann nur eine reduzierte Datenmenge in das Cloud-basierte System zu übertragen. Einen weiteren Ansatzpunkt betrifft die Übertragung der Daten, indem versucht wird schneller Übertragungskanäle mit entsprechenden Bandbreiten bereitzustellen. Im Rahmen der Analytik selbst werden die Cloud-basierten Systeme mit highend Rechnern ausgestattet, auf denen dann effiziente Algorithmen ablaufen sollen.

Es hat sich gezeigt, dass hohe Bandbreiten und geringe Wartezeiten allein oft nicht ausreichend sind. Dies gilt insbesondere dann, wenn kritische industrielle Prozesse involviert sind.

Aus der JP 2015 056766 A ist ein Cloud-Steuerungssystem bekannt, mit welchem eine Berechnung von Steuerbefehlen innerhalb einer vorgegebenen Steuerzeit vorgenommen werden kann, selbst wenn eine Verzögerung bei der Kommunikation in einem IP-Netzwerk auftritt, welches die Steuerung mit der cloud verbindet. Hierzu wird die Berechnung von Steuerbefehlen auf mehrere Server in der Cloud verteilt und die Verteilung neu geregelt, wenn eine Antwort von einem der Server später als eine Standard-Antwortzeit erhalten wird.

Aus der EP 2 605 096 A1 ist eine sicherheitsgerichtete Steuerung in Kombination mit Cloud-Computing bekannt. Abhängig davon, ob von einem in der Cloud angeordneten Rechnerverbund ermittelte, sicherheitsgerichtete Steuersignale als korrekt anerkannt werden, wird der technische Prozess entweder entsprechend dem sicherheitsgerichteten Steuersignal in fehlersicherer Weise gesteuert oder in fehlersicherer Weise in einen sicheren Zustand überführt.

Es ist somit Aufgabe der Erfindung eine alternative Vorrichtung und ein alternatives Verfahren anzugeben, welche Cloud-basierte Prozesssteuerung und/oder -analytik im industriellen Umfeld deterministisch in Echtzeit unterstützt.
Die Aufgabe wird gelöst durch ein System mit den Merkmalen des Anspruchs 1 und ein Verfahren mit den Merkmalen des Anspruchs 3.
Danach weist das System zur Steuerung eines Prozesses anlagenseitig wenigstens eine Automatisierungseinheit auf. Bei der industriellen Anlage kann es sich um jedwede Anlage mit einem Produktions- oder Fertigungsprozess im industriellen Umfeld handeln. Anlagenseitig heißt, dass die Automatisierungseinheit Bestandteil des originären Automatisierungssystems ist und in der Regel prozessnah angeordnet ist. Die Automatisierungseinheit führt eine Anzahl erster Prozessgrößenberechnungen durch. Dazu ist die Automatisierungseinheit mittels Sensoren und Aktoren in den Prozess eingebunden. Prozesseingangsvariablen sind die Sensoren und Aktoren, die für die Steuerung des Prozesse vom Eingangsbaustein der Automatisierungseinheit in der Regel zyklisch eingelesen und zwischengespeichert werden und somit einer weiteren softwaretechnischen Verarbeitung durch die Prozessoren der Automatisierungskomponenten zur Verfügung stehen. Die konkrete softwaretechnische Verarbeitung innerhalb der Automatisierungseinheit erfolgt nach einem Prozesssteuerungs-Algorithmus. Die Ausgangsgrößen dieser Verarbeitung, d.h. die Ergebnisse des Prozesssteuerungs-Algorithmus der anlagenseitigen Automatisierungseinheit werden über einen Ausgangsbaustein der Automatisierungseinheit in der Regel ebenfalls zyklisch prozesswirksam. Die Zeit t_{freq} beschreibt die Zeitspanne zwischen dem Zeitpunkt (t=0) an dem die Prozesseingangsvariablen im Eingangsbaustein vorliegen, d.h der Prozessor der Automatisierungseinheit auf die Daten zugreifen kann und dem Zeitpunkt an dem die Ergebnisse eines Prozesssteuerungs-Algorithmus im Ausgangsbaustein vorliegen und also über die Ausgangsbaugruppen prozesswirksam werden können. Die Prozessgrößen (Prozesseingangsvariablen) und die Ergebnisse bzw. wesentlichen Größen des Prozesssteuerungs-Algorithmus werden einem übergeordneten Steuerungs-/und Überwachungssystem zur Verfügung gestellt, indem durch eine erste Datenverbindung die Automationseinheit mit diesem übergeordneten Überwachungssystem zur Steuerung und/oder Überwachung des Prozesses verbunden ist.

Das System weist weiter wenigstens eine anlagenexterne Recheneinheit auf, die über verteilte Kommunikationsmechanismen auf die wenigstens eine Automatisierungseinheit aufgeschaltet ist, d.h. mit dieser Einheit Nachrichten austauschen kann. Als anlagenextern soll eine Recheneinheit angesehen werden, wenn sie räumlich und/oder funktional außerhalb des originären Automatisierungssystems angesiedelt ist. Solche anlagenexternen Recheneinheiten können sich z.B. bei externen Serviceprovidern befinden und werden auch als Cloud-Recheneinheiten bezeichnet. Der Datenaustausch erfolgt über eine zweite Datenverbindung. Zu den verteilten Kommunikationsmechanismen gehören beispielsweise die Kommunikationsstandards OPC (OPC DA, OPC UA) oder TCP/IP (Profinet), die den Zusammenschluss unabhängiger Recheneinheiten zu einem verteilten System erlauben.
Die anlagenexterne Recheneinheit führt parallel zur Berechnung des ersten Prozesssteuerungs-Algorithmus der anlagenseitigen Automatisierungseinheit einen zweiten Prozesssteuerungs-Algorithmus durch. Vorteilhaft wird dieser zweite Prozessteuerungs-Algorithmus wesentlich komplexer sein und wesentlich höhere Rechenleistung verglichen mit der Rechenleistung innerhalb der lokalen Automatisierungseinheit erfordern. Die komplexeren, zweiten Prozesssteuerungs-Algorithmen werden dabei in der Regel auch auf eine größere Menge von Daten fußen, die die Prozesseingangsvariablen für die Berechnung der Prozesssteuerungs-Algorithmen in der anlagenseitigen Automatisierungseinheit umfassen, aber auch zusätzliche Daten beinhalten. Sofern diese Daten vom Prozessselbst bereitgestellt werden können (beispielsweise durch zusätzliche und bis dahin nicht genutzte Sensoren oder Aktoren), werden diese ebenfalls über den Eingangsbaustein der anlagenseitigen Automatisierungseinheit eingelesen und bereitgestellt. Solche Daten können aber auch historische Daten umfassen, wie sie beispielsweise innerhalb der anlagenseitigen Automatisierungseinheit, des Überwachungssystems oder der anlagenexternen Recheneinheit selbst vorliegen. Die Berechnungen, die in der anlagenexternen Recheneinheit durchgeführt werden, sind weit komplexer und rechenintensiver als diejenigen, die in der anlagenseitigen Automatisierungseinheit durchgeführt werden können. So übernimmt die externe Recheneinheit erweiterte regelungstechnische Funktionen, wie sie beispielsweise von MPC-Reglern bekannt sind. Weiterhin können auch Condition Monitoring Systeme, Simulationssysteme oder Historiensysteme innerhalb dieser Recheneinheit zusätzliche Auswertungen durchführen und zu diesem Zwecke auch auf die durch die Regelung verarbeiteten Signale zurückgreifen. Wegen der höheren Anzahl von Daten, insbesondere historischer Daten können die Prozesssteuerungs-Algorithmen beispielsweise auch sog. Support Vector Machines (SVM) basierten Model Predictive Control (MPC) Algorithmen umfassen.

Wegen der oft notwendigen Anforderung an Echtzeit, d.h. der schnellen, insbesondere aber deterministisch wiederholten Abfolge von Ereignissen, insbesondere die Einhaltung einer vorgegebenen Abtastzeit werden die von der anlagenexternen Recheneinheit gesendeten und von der anlagenseitigen Automatisierungseinheit empfangenden Ergebnisse aus der Bearbeitung des zweiten Prozesssteuerungs-Algorithmus dahingehend geprüft, ob sie innerhalb der vorgegebenen Abtastzeit t_{freq} von der anlagenseitigen Automatisierungseinheit empfangen wurde. Die Prüfung übernimmt ein Überprüfungsbaustein innerhalb der Software der anlagenseitigen Automatisierungseinheit.
Für den Fall, dass die Ergebnisse innerhalb der vorgegebenen Zeit empfangen wurden, werden sie über den Ausgabebaüstein innerhalb der anlagenseitigen Automatisierungseinheit ihren Ausgabebaugruppen zur Verfügung gestellt und somit prozesswirksam. Für den Fall allerdings, dass die Zeit t_{freq} abgelaufen ist, ohne ein Ergebnis von Berechnungen des zweiten Prozessgrößen-Algorithmus innerhalb der anlagenseitigen Automatisierungseinheit vorliegen zu haben, werden die Ergebnisse des parallel laufenden ersten Prozessgrößen-Algorithmus über die Ausgabebaugruppen prozesswirksam geschalten. Auf diese Weise ist auch sichergestellt, dass in Echtzeit ein Ergebnis vorliegt und etwaige Verzögerungen in der Kommunikation ohne wesentlichen Einfluss sind. Ein Ergebnis des ersten Prozesssteuerungs-Algorithmus mag für den Prozess nicht das Optimum darstellen, in jedem Fall stellt es jedoch eine vernünftige fehlerfreie Steuerung des Prozesses sicher.

Die Aufgabe wird ferner gelöst durch ein Verfahren zur Steuerung und/oder Analytik eines industriellen Prozesses, wobei eine lokale und anlagenseitige Automatisierungseinheit innerhalb einer Zeit t_{freq} einen ersten Prozesssteuerungs-Algorithmus auf Basis einer Anzahl von Prozesseingangsvariablen N ausführt und wobei eine externe Recheneinheit einen zweiten Prozesssteuerungs-Algorithmus auf Basis einer Anzahl von Prozesseingangsvariablen M ausführt. Das Verfahren weist die folgenden Schritte auf: Bei t=0, d.h. beginnend mit t=0 werden in einem ersten Schritt die Prozesseingangsvariablen N und M durch die lokale Automatisierungseinheit gelesen. Sie werden damit dem Prozessor der Automatisierungseinheit zur Bearbeitung zur Verfügung gestellt. Bei den Prozesseingangsvariablen N handelt es sich um Daten von Sensoren und/oder Aktoren, die für die Berechnung eines ersten Prozesssteuerungs-Algorithmus notwendig sind. Bei den Prozesseingangsvariablen M handelt es sich um Daten von Sensoren und/oder Aktoren, die für die Berechnung eines zweiten, vergleichsweise komplexeren Prozesssteuerungs-Algorithmus notwendig sind. Das bedeutet es werden i.d.R. die Prozesseingangsvariablen M auch die Prozesseingangsvariablen N umfassen. In einem nächsten Schritt werden die Prozesseingangsvariablen M vom anlagenseitigen Automatisierungssystem an die externe Recheneinheit gesendet. Parallel dazu werden durch die lokale Automatisierungseinheit auf Basis der Prozesseingangsvariablen N die Berechnungen nach dem ersten Prozesssteuerungs-Algorithmus ausgeführt und die Ergebnisse bereitgestellt. Ein solcher Prozesssteuerungs-Algorithmus kann ein Iterationsschritt eines einfaches Regelverfahren sein, abhängig von der Leistung der anlagenseitigen Automatisierungseinheit ggf. auch schon eines MPC-Regelverfahren. Mit Erhalt der Prozesseingangsvariablen M in der externen Recheneinheit führt die externe Recheneinheit einen zweiten Prozesssteuerungs-Algorithmus aus und ermittelt die Ergebnisse. Ein solcher zweiter Prozesssteuerungs-Algorithmus ist ein mit dem ersten Prozesssteuerungs-Algorithmus verwandter Algorithmus. Er ist darauf gerichtet ein mit der Berechnung in der anlagenseitigen Automatisierungseinheit vergleichbares, in der Regel aber genaueres, akkurateres, präziseres, höherwertiges Ergebnis zu liefern. Zumindest aber werden die Berechnungsmethoden im zweiten Prozesssteuerungs-Algorithmus komplexer und umfänglicher sein. Vergleichbar in diesem Sinne heißt die zweiten Berechnungen sind technologisch gleichwertig bzw. äquivalent. Beispielsweise könnte, sofern der erste Prozesssteuerungs-Algorithmus einen einfachen Regelkreis umfasst, der zweite Prozesssteuerungs-Algorithmus einen MPC-Regler abbilden. In einem weiteren Schritt werden die Ergebnisse dieser zweiten Berechnung in der anlagenseitigen Automatisierungseinheit empfangen. Dies kann durch Abfrage der lokalen Automatisierungseinheit erfolgen, oder durch aktives Senden der anlagenexternen Recheneinheit. Innerhalb der anlagenseitigen Automatisierungseinheit wird in einem nächsten Schritt überprüft, ob die Ergebnisse des zweiten Prozesssteuerungs-Algorithmus in der anlagenseitigen Automatisierungseinheit so rechtzeitig vorliegen, dass sie zur Abtastzeit prozesswirksam werden. Dazu wird das Ergebnis innerhalb der Zeit Abtastzeit vorliegen müssen, maximal zum Zeitpunkt der Abtastzeit. Für den Fall, dass das Ergebnis rechtzeitig vorliegt, wird dieses angewendet, d.h. das Ergebnis wird Grundlage der Prozesssteuerung, der Prozess wird auf Basis dieses Ergebnisses gesteuert. Sofern, das Ergebnis einen Wert für die Ansteuerung eines Regelstellgliedes beinhaltet würde das zugehörige Stellglied auf mit diesem Wert von der Automatisierungseinheit angesteuert. Andernfalls wird das Ergebnis des ersten Prozesssteuerungs-Algorithmus auf die Prozesssteuerung angewendet, d.h. der Prozess wird auf Grundlage dieses Ergebnisses bzw. direkt mit diesem Ergebnis gesteuert.

Die oben beschriebenen Eigenschaften, Merkmale, Vorteile dieser Erfindung sowie die Art und Weise, wie diese erreicht werden, werden in Verbindung mit den Figuren näher erläutert. Hierbei zeigen in schematischer Darstellung:
- Fig. 1: ein System für eine verteilte Prozesssteuerung einer industriellen Anlage
- Fig. 2: das Ablaufdiagram des beschriebenen Verfahrens.

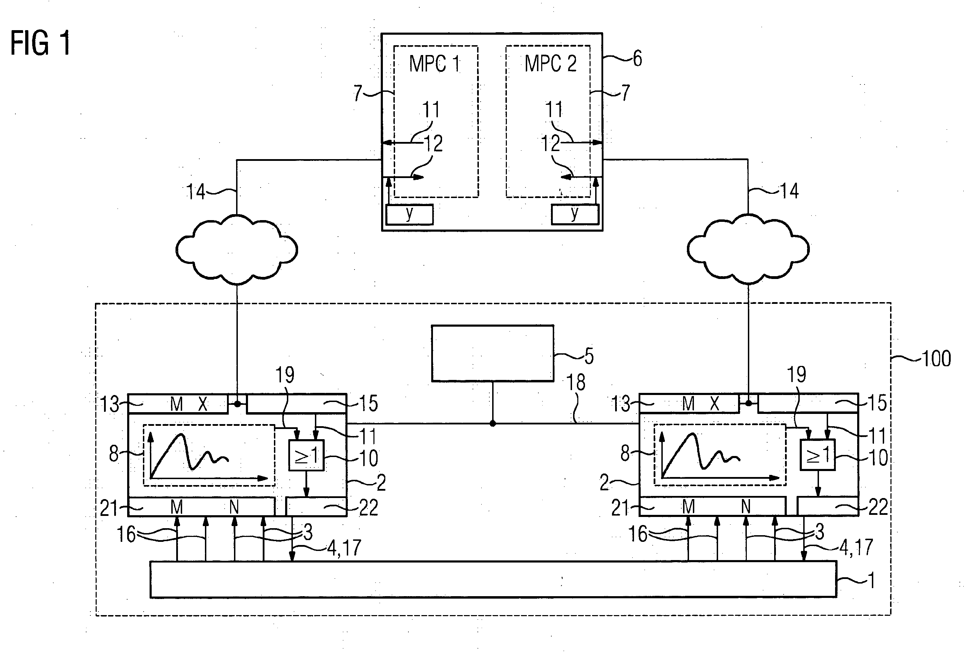

Fig.1 zeigt ein System 100 zur Steuerung des industriellen Prozesses 1, beispielsweise einen Prozess zur Wasseraufbereitung in einer Kläranlage oder eine Prozess zur Förderung einer Flüssigkeit, eines Gases durch eine Pipeline. Der industrielle Prozess kann auch ein Prozess sein, der innerhalb eines Standortes abläuft, oder aber über mehrere Standorte hinweg. Der Prozess 1 wird gesteuert und geregelt über dezentrale, anlagenseitige Automatisierungseinheiten 2. Diese sind mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung und Regelung des Prozesses sowie auf die Daten-Kommunikation zwischen den Einheiten. Die Automatisierungseinheit 2 weisen zur Steuerung und Regelung des Prozesses eine Reihe von Wirkverbindungen 3, 16 zu in Figur 1 nicht näher dargestellten Sensoren oder Aktoren aufweisen. Über diese Verbindung liest der Eingangsbaustein 21 die Daten ein, die danach in einem Speicherbereich der Automatisierungseinheit als Prozesseingangsvariablen N, M vorliegen. Über die Wirkverbindungen 4, 17 werden Steuerkommandos vom Ausgabebaustein 22 zu in Figur 1 nicht näher dargestellten Aktoren des Prozesses realisiert. Beispielhaft sind zwei Automatisierungseinheiten 2 gezeigt, in der Praxis werden mehrere Automatisierungseinheiten den Prozess steuern, regeln und überwachen. Über eine erste Datenverbindung 20 sind die Automatisierungseinheiten 2 mit dem Überwachungssystem 5 verbunden, welches die Steuerung und Überwachung des Prozesses 1 übernimmt. Die Automatisierungseinheiten 2 führen auf Basis der über Wirkverbindung 3 generierten Prozesseingangsvariablen N Prozesssteuerungs-Algorithmen 8 aus. Das sind prozesswirksame Überwachungsanalysen und Regelungsfunktionen, die i.d.R. einfachere und weniger komplexe Analyse- und Regelungsaufgaben beinhalten. Das Ergebnis 19 dieses Prozesssteuerungs-Algorithmus wird in der Automatisierungseinheit 2 zur weiteren Verwendung vorgehalten und soweit nicht benötigt in einem nächsten Zyklus überschrieben. In dieser Konfiguration ist das System 100 funktionsfähig und kann seine Steuer-, Regelungs- und Überwachungsaufgaben erfüllen. Daten, die über die Wirkverbindungen 3, 16 von Sensoren und Aktoren des Prozesses von der anlagenseitigen Automatisierungseinheit 2 als Prozesseingangsvariablen M eingelesen worden sind, werden dem Sendebaustein 13 übergeben. Die Prozesseingangsvariablen M können auch die Prozesseingangsvariablen N enthalten. Zusätzlich können dem Sendebaustein 13 auch historische Daten X übergeben werden, die im Verlaufe der Zeit in Automatisierungseinheit 2 gespeichert worden sind. Das System 100 ist erweitert durch eine anlagenexterne Recheneinheit 6. Diese ist mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung, Regelung und Analytik des Prozesses sowie auf die Daten-Kömmunikation zwischen den Einheiten. Die Recheneinheit 6 ist über eine zweite Datenverbindung 14 mit den Automatisierungseinheiten 2 verbunden. Im vorliegenden Beispiel sind beide Automatisierungseinheiten 2 über die zweite Datenverbindung 14 mit der anlagenexternen Recheneinheit 6 verbunden. In anderen Ausführungsformen kann auch nur eine oder eine beliebige Anzahl von Automatisierungseinheiten 2 mit der anlagenexternen Recheneinheit 6 verbunden sein. Die zweite Datenverbindung 14 wird bevorzugt über das Internet entweder kabelgebunden oder drahtlos realisiert. Die anlagenexterne Recheneinheit 6 führt auf Basis von Eingangsprozessvariablen 12, die im wesentlichen basieren auf den Prozesseingangsvariablen M Prozesssteuerungs-Algorithmen 7 durch und gibt Ergebnisse 11 dieser Berechnungen aus. Die Eingangsprozessvariablen 12 können ebenso basieren auf den historischen Daten X, die in der Automatisierungseinheit 2 vorliegen. Alternativ oder zusätzlich können die Eingangsprozessvariablen 12 auf historischen Daten Y, die in der Recheneinheit 6 selbst vorliegen basieren. Beispielhaft stellt Fig. 1 als Prozesssteuerungs-Algorithmus 7 einen MPC Regelstruktur dar. Aber auch umfangreichere Datenanalytik kann Gegenstand des vorgenannten Algorithmus sein. Die Ergebnisse 11 des Prozesssteuerungs-Algorithmus 7 werden vom Empfangsbaustein 15 der Automatisierungskomponente 2 empfangen. Der Überprüfungsbaustein 10 erhält die Information darüber, ob das Ergebnis 11 innerhalb einer von der konkreten Regelungsaufgabe vorgegebenen Zykluszeit verfügbar ist. Ist es verfügbar wird es auf den Ausgabebaustein 22 gegeben und wird über die Wirkverbindung 17 prozesswirksam. Liegt es nicht innerhalb des Zeitintervalls vor, wird der Ausgabebaustein 22 mit dem parallel ermittelten Ergebnis 19 versorgt und als Wirkverbindung 4 prozesswirksam.

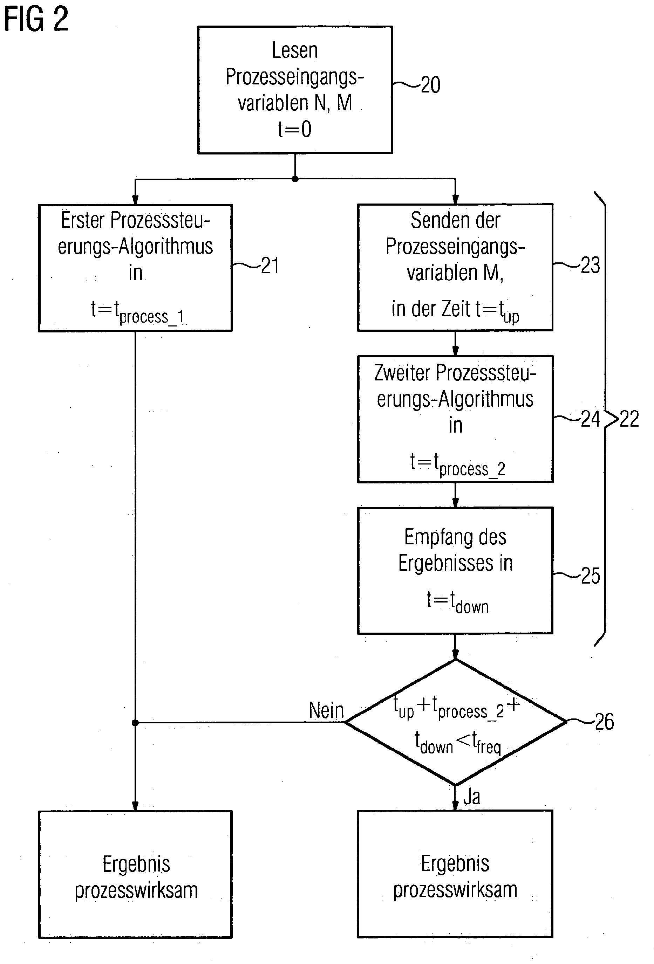

Fig. 2 zeigt das Ablaufdiagramm des beschriebenen Verfahrens. Die Steuerung und Regelung des Prozesses 1 erfolgt zyklisch. Die Zykluszeit ist mit t_{freq} festgelegt.
Danach werden im Schritt 20 die Prozesseingangsvariablen N und M gelesen. Auch das Einlesen von Prozesseingangsvariablen durch die Automatisierungseinheit erfolgt zyklisch. D.h. zu Beginn der Zykluszeit steht dem Programm das Prozessabbild aktualisiert zur Verfügung, indem die Eingabebaugruppen 21 der Automatisierungseinheit 2 abgefragt wurden. Am Ende der Zykluszeit werden die Ausgabebaugruppen 22 mit den Prozessergebnissen 11, 19 versorgt, worüber diese den Prozess steuern. Jedes neue Lesen durch das zyklische Programm der Automatisierungseinheit soll zum Zeitpunkt t=0 erfolgen. Die Prozesseingangsvariablen N werden im Schritt 21 durch den ersten Prozesssteuerungs-Algorithmus in der Automatisierungseinheit 2 innerhalb der Zeit t_{process_1} verarbeitet. Das Ergebnis 19 steht am Ende der Berechnung dieses Prozesssteuerungs-Algorithmus zur Verfügung. Die Automatisierungseinheit 2 ist in der Lage innerhalb der Zykluszeit t_{freq} ihren Prozesssteuerungs-Algorithmus zu durchlaufen. Parallel zum Schritt 21 läuft die Schrittabfolge 22. Darin werden im Schritt 23 die Prozesseingangsvariablen M an die Recheneinheit 6 gesendet. Der gesamte Schritt 23 soll auch den Empfang der Daten in der Recheneinheit 6 beinhalten und innerhalb der Zeit tᵤₚ erfolgen. Die Prozesseingangsvariablen M können auch die Prozesseingangsvariablen N beinhalten, sie können auch nur diese umfassen. In der Regel werden die Prozesseingangsvariablen jedoch Prozessdaten umfassen, die über den Umfang der Daten N hinausgehen. Auf Basis dieser Prozesseingangsvariablen wird im Schritt 24 ein zweiter Prozesssteuerungs-Algorithmus innerhalb der Zeit t_{process_2} bearbeitet, der Ergebnisse zur Steuerung des Prozesses beispielsweise Ansteuerbefehle für Aktoren liefert. Diese werden im Schritt 25 innerhalb der Zeit t=t_{down} von der Automatisierungseinheit 2 empfangen. Im Entscheidungsblock 26 wird durch die Automatisierungseinheit 2 geprüft, ob die Summe der Zeiten tᵤₚ, t_{process_2} und t_{down} kleiner als die Zykluszeit t_{freq} ist und also das Ergebnis des Prozesssteuerungs-Algorithmus innerhalb der Zykluszeit vorliegt. Ist dies der Fall werden diese Berechnungen prozesswirksam, d.h. Aktoren werden beispielsweise auf Basis Stellgrößenberechnungen in der Recheneinheit 6 angesteuert. Sollte die Ergebnisse nicht innerhalb der Zykluszeit vorliegen werden alternativ die Berechnungen der Automatisierungseinheit 2 prozesswirksam.

## Patentansprüche

1. System zur Steuerung und/oder Analytik eines industriellen Prozesses (1), aufweisend anlagenseitig wenigstens eine Automatisierungseinheit (2), die mittels einer ersten Datenverbindung (18) mit einem Überwachungssystem (5) zur Steuerung und/oder Überwachung des Prozesses (1) verbunden ist und dazu ausgelegt ist, innerhalb einer Zeit t_{freq} eine Ermittlung von Ergebnissen (19) eines ersten Prozesssteuerungs-Algorithmus (8) auf Basis von zur Zeit t=0 eingelesenen Prozesseingangsvariablen N durchzuführen, wobei das System wenigstens eine anlagenexterne Recheneinheit (6) aufweist,
- wobei die anlagenexterne Recheneinheit über verteilte Kommunikätionsmechanismen auf die wenigstens eine Automatisierungseinheit aufgeschaltet ist und mit dieser über eine zweite Datenverbindung (14) in Datenaustausch steht,
- wobei ein Eingangsbaustein (21) der anlagenseitigen Automatisierungseinheit zum Einlesen von Prozesseingangsvariablen M zur Zeit t=0 vorgesehen ist,
- wobei ein Sendebaustein (13) der anlagenseitigen Automatisierungseinheit dazu ausgelegt ist, die Prozesseingangsvariablen M zur Verarbeitung an die anlagenexterne Recheneinheit über die zweite Datenverbindung zu senden,
- wobei ein Rechenwerk der anlagenexternen Recheneinheit dazu vorgesehen ist, einen zweiten Prozesssteuerungs-Algorithmus (7) auf Basis der Prozesseingangsvariablen M auszuführen,
- wobei ein Empfangsbaustein (15) der lokalen Automatisierungseinheit zum Empfang von Ergebnissen (11) des zweiten Prozesssteuerungs-Algorithmus (7) vorgesehen ist,
- wobei ein Uberprüfungsbaustein (10) in der anlagenseitigen Automatisierungseinheit zur Prüfung vorgesehen ist, ob die Ergebnisse des zweiten Prozesssteuerungs-Algorithmus innerhalb einer Zeit t<t_{freq} oder t=t_{freq} empfangen wurden,
- wobei ein Ausgabebaustein (22) in der anlagenseitigen Automatisierungseinheit dazu vorgesehen ist, die Ergebnisse des zweiten Prozesssteuerungs-Algorithmus auf den Prozess anzuwenden, sofern diese Ergebnisse in der Zeit t<t_{freq} oder t= t_{freq} empfangen Z wurden, wobei
das System dazu ausgelegt ist, die Ergebnisse des ersten Prozesssteuerungs-Algorithmus (8) auf den Prozess anzuwenden, sofern die Ergebnisse des zweiten Prozesssteuerungs-Algorithmus (7) in der Zeit t>t_{freq} empfangen wurden.

2. System nach Anspruch 1 **dadurch gekennzeichnet, dass** die anlagenexterne Recheneinheit mit einer Anzahl weiterer anlagenexterner Recheneinheiten verbunden ist.

3. Verfahren zur Steuerung und/oder Analytik eines industriellen Prozesses, wobei eine lokale Autömatisierungseinheit innerhalb einer Zeit t_{freq} einen ersten Prozesssteuerungs-Algorithmus auf Basis einer Anzahl von Prozesseingangsvariablen N ausführt und eine externe Recheneinheit einen zweiten Prozesssteuerungs-Algorithmus auf Basis einer Anzahl von Prozesseingangsvariablen M ausführt, aufweisend die Schritte:
- bei t=0 Lesen der Prozesseingangsvariablen N und M durch die lokale Automatisierungseinheit,
- Senden der Prozesseingangsvariablen M an die externe Recheneinheit,
- Ermittlung wenigstens eines Ergebnisses des ersten Prozesssteuerungs-Algorithmus auf Basis der Prozesseingangsvariablen N durch die lokale Automatisierungseinheit,
- Ermittlung wenigstens eines Ergebnisses des zweiten Prozesssteuerungs-Algorithmus auf Basis der Prozesseingangsvariablen M durch die externe Recheneinheit,
- Empfangen des wenigstens einen Ergebnisses des zweiten Prozesssteuerungs-Algorithmus in der lokalen Automatisierungseinheit,
- Überprüfung ob das Ergebnis des zweiten Prozesssteuerungs-Algorithmus in der Zeit t<t_{freq} oder t=t_{freq} empfangen wurde,
- Anwenden des Ergebnisses des zweiten Prozesssteuerungs-Algorithmus auf den Prozess, sofern das Ergebnis in der Zeit t<t_{freq} oder t=t_{freq} empfangen wurde, die Ergebnisse des ersten Prozesssteuerungs-Algorithmus auf den Prozess angewendet werden, sofern das Ergebnis des zweiten Prozesssteuerungs-Algorithmus in der Zeit t>t_{freq} empfangen wurde.

4. Verfahren nach Anspruch 3 **dadurch gekennzeichnet, dass** die Prozesseingangsvariablen N und M identisch sind.

5. Verfahren nach einem der Ansprüche 3 und **dadurch gekennzeichnet, dass** die Ermittlung der Ergebnisse des ersten und zweiten Prozessteuerungs-Algorithmus zusätzlich auf Basis einer Anzahl von historischen Daten erfolgt.

## Claims

1. System for control and/or analytics of an industrial process (1), having on the plant side at least one automation unit (2), which is connected by means of a first data connection (18) to a monitoring system (5) for control and/or monitoring of the process (1) and is designed to carry out a determination, within a time t_{freq}, of results (19) of a first process control algorithm (8) based on process input variables N read in by time t=0, wherein the system has at least one processing unit external to the plant (6),
- wherein the processing unit external to the plant is connected via distributed communication mechanisms to the at least one automation unit and is exchanging data with this via a second data connection (14),
- wherein an input element (21) of the plant-side automation unit is intended to read in process input variables M by time t=0,
- wherein a send element (13) of the plant-side automation unit is designed to send the process input variables M to the processing unit external to the plant for processing via the second data connection,
- wherein a processing system of the processing unit external to the plant is intended to execute a second process control algorithm (7) on the basis of the process input variables M,
- wherein a receive element (15) of the local automation unit is intended to receive results (11) of the second process control algorithm (7),
- wherein a checking element (10) in the plant-side automation unit is intended to check on whether the results of the second process control algorithm were received within a time t<t_{freq} or t=t_{freq},
- wherein an output element (22) in the plant-side automation unit is intended to apply the results of the second process control algorithm to the process, where these results were received within time t<t_{freq} or t=t_{freq},
wherein the system is designed to apply the results of the first process control algorithm (8) to the process, where the results of the second process control algorithm (7) were received within the time t>t_{freq}.

2. System according to claim 1, **characterised in that** the processing unit external to the plant is connected to a number of further processing units external to the plant.

3. Method for control and/or analytics of an industrial process, wherein a local automation unit, within a time t_{freq} executes a first process control algorithm based on a number of process input variables N and an external processing unit executes a second process control algorithm based on a number of process input variables M, having the steps:
- For t=0, reading of the process input variables N and M by the local automation unit,
- Sending the process input variable M to the external processing unit,
- Determination of at least one result of the first process control algorithm on the basis of the process input variables N by the local automation unit,
- Determination of at least one result of the second process control algorithm on the basis of the process input variables M by the external processing unit,
- Receipt of the at least one result of the second process control algorithm in the local automation unit,
- Checking whether the result of the second process control algorithm was received within the time t<t_{freq} or t=t_{freq},
- Applying the result of the second process control algorithm to the process, where the result was received within the time t<t_{freq} or t=t_{freq},
wherein the results of the first process control algorithm are applied to the process, where the result of the second process control algorithm was received within the time t>t_{freq}.

4. Method according to claim 3, **characterised in that** the process input variables N and M are identical.

5. Method according to one of claims 3 and 4, **characterised in that** the results of the first and second process control algorithm are additionally determined on the basis of a number of items of historical data.

## Revendications

1. Système de commande et/ou d'analyse d'un processus (1) industriel comportant, du côté de l'installation, au moins une unité (2) d'automatisation, qui, au moyen d'une première liaison (18) de données, est reliée à un système (5) de contrôle pour la commande et/ou le contrôle du processus (1) et qui est conçue pour effectuer, dans un temps t_{freq}, sur la base de variables N d'entrée de processus lues à l'instant t=0, une détermination de résultats (19) d'un premier algorithme (8) de commande de processus,
le système ayant au moins une unité (6) de calcul extérieure à l'installation,
- dans lequel l'unité de calcul extérieure à l'installation est branchée, par des mécanismes de communication réparties sur la au moins une unité d'automatisation, et est en échange de données avec celle-ci par une deuxième liaison (14) de données,
- dans lequel un module (21) d'entrée de l'unité d'automatisation du côté de l'installation est prévu pour lire des variables M d'entrée de processus à l'instant t=0,
- dans lequel un module (13) d'émission de l'unité d'automatisation du côté de l'installation est conçu pour envoyer des variables M d'entrée de processus pour traitement à l'unité de calcul extérieure à l'installation par l'intermédiaire de la deuxième liaison de données,
- dans lequel un bloc de calcul de l'unité de calcul extérieure à l'installation est prévu pour effectuer un deuxième algorithme (7) de commande de processus sur la base des variables M d'entrée de processus,
- dans lequel un module (15) de réception de l'unité d'automatisation locale est prévu pour recevoir des résultats (11) du deuxième algorithme (7) de commande de processus,
- dans lequel un module (10) de contrôle dans l'unité d'automatisation du côté de l'installation est prévu pour contrôler si les résultats du deuxième algorithme de commande de processus ont été reçus dans un temps t<t_{freq} ou t=t_{freq},
- dans lequel un module (22) d'émission dans l'unité d'automatisation du côté de l'installation est prévu pour appliquer les résultats du deuxième algorithme de commande de processus au processus, dans la mesure où ces résultats ont été reçus dans le t<t_{freq} ou t=t_{freq},
dans lequel le système est conçu pour appliquer les résultats du premier algorithme (8) de commande de processus au processus, dans la mesure où les résultats du deuxième algorithme (7) de commande de processus ont été reçus dans le temps t>t_{freq}.

2. Système suivant la revendication 1, **caractérisé en ce que** l'unité de calcul extérieure à l'installation est reliée à un certain nombre d'autres unités de calcul extérieures à l'installation.

3. Procédé de commande et/ou d'analyse d'un processus industriel, dans lequel une unité locale d'automatisation effectue, dans un temps t_{freq}, un premier algorithme de commande de processus sur la base d'un certain nombre de variables N d'entrée de processus et une unité extérieure de calcul effectue un deuxième algorithme de commande de processus sur la base d'un certain nombre de variables M d'entrée de processus,
comportant les stades :
- à t=0, lecture des variables N et M d'entrée de processus par l'unité locale d'automatisation,
- envoi des variables M d'entrée de processus à l'unité extérieure de calcul,
- détermination d'au moins un résultat du premier algorithme de commande de processus sur la base des variables N d'entrée de processus par l'unité locale d'automatisation,
- détermination d'au moins un résultat du deuxième algorithme de commande de processus sur la base des variables M d'entrée de processus par l'unité extérieure de calcul,
- réception du au moins un résultat du deuxième algorithme de commande de processus dans l'unité locale d'automatisation,
- contrôle du point de savoir si le résultat du deuxième algorithme de commande de processus dans le temps t<t_{freq} ou t=t_{freq} a été reçu,
- application du résultat du deuxième algorithme de commande de processus au processus, dans la mesure où le résultat a été reçu dans le temps t<t_{freq} ou t=t_{freq},
- dans lequel on applique le premier algorithme de commande de processus au processus, dans la mesure où le résultat du deuxième algorithme de commande de processus a été reçu dans le temps t>t_{freq}.

4. Procédé suivant la revendication 3, **caractérisé en ce que** les variables N et M d'entrée de processus sont les mêmes.

5. Procédé suivant l'une des revendications 3 et 4, **caractérisé en ce que** la détermination des résultats du premier et deuxième algorithmes de commande de processus s'effectue supplémentairement sur la base d'un certain nombre de données historiques.
